# EUROPÄISCHE PATENTSCHRIFT

(11) **EP 1 911 699 B1**
(45) Veröffentlichungstag und Bekanntmachung des Hinweises auf die Patenterteilung: **29.12.2010**
(21) Anmeldenummer: 07018240.7
(22) Anmeldetag: 18.09.2007
(51) Int. Cl.: B65G 47/53, B65G 47/61

(54) **Verfahren und Vorrichtung zum Übergeben eines Transportbügels für Bekleidungsstücke an einen nachfolgenden Förderer**
Method and device for transferring a transport hanger for garments to a subsequent conveyor
Procédé et dispositif de transmission d'une boucle de transport pour pièces de vêtements sur un convoyeur suivant

(30) Priorität: 10.10.2006 DE 102006048142
(43) Veröffentlichungstag der Anmeldung: 16.04.2008
(73) Patentinhaber: Herbert Kannegiesser GmbH, 32602 Vlotho (DE)
(72) Erfinder: Uwe, Priester, 32602 Vlotho (DE); Heinz, Engelbert, 32602 Vlotho (DE); Möcker, Jürgen, 32049 Herford (DE)
(74) Vertreter: Möller, Friedrich

(56) Entgegenhaltungen:
- DE-A1- 3 935 487
- DE-U1- 20 217 423
- US-A- 5 467 863

## Beschreibung

Die Erfindung betrifft ein Verfahren zum Übergeben eines Transportbügels für Bekleidungsstücke von einem Zuförderer an einen nachfolgenden Förderer gemäß dem Oberbegriff des Anspruchs 1. Des Weiteren betrifft die Erfindung eine Vorrichtung zur Übergabe eines Transportbügels für Bekleidungsstücke an einen nachfolgenden Förderer gemäß dem Oberbegriff des Anspruchs 8.

In textilver- und bearbeitenden Betrieben, insbesondere Wäschereien, werden Transportbügel zum Transport von Bekleidungsstücken durch den Betrieb eingesetzt. Bei den Transportbügeln kann es sich um solche handeln, die zum Aufhängen von Hemden, Mänteln, Sakkos, Kitteln oder dergleichen oder auch zum Aufhängen bzw. Festklemmen von Hosen und anderen Bekleidungsstücken dienen. Das Dokument US-A-5467863 offenbart ein Verfahren zum Übergeben eines Transportbügels gemäß dem Oberbegriff des Anspruchs 1 sowie eine Vorrichtung zur Übergabe eines Transportbügels gemäß dem Oberbegriff des Anspruchs 8.

Während des Transports durch den Betrieb müssen sowohl die mit einem Bekleidungsstück beladenen Transportbügel als auch leere Transportbügel von einem Förderer zu einem anderen übergeben werden. Hierbei kann es sich um beliebige und vor allem auch unterschiedliche Förderer handeln, zum Beispiel solche mit einer umlaufenden Förderkette zum angetriebenen Weitertransport der leeren oder beladenen Transportbügel oder auch unangetriebene Schwerkraftförderer wie abwärts verlaufende Rutschen, Schienen oder dergleichen. Bei der Übergabe der Transportbügel von einem Förderer zum anderen hat es sich als problematisch erwiesen, wenn die Transportbügel mit unterschiedlicher Orientierung vom Zuförderer an den nachfolgenden Förderer übergeben werden müssen. Die Transportbügel weisen einen Bügelhaken auf, der üblicherweise U-förmig oder halbkreisförmig ausgebildet ist. An einem Ende dieses Bügelhakens befindet sich ein Steg, womit der Bügelhaken mit einem Unterteil des Transportbügels verbunden ist. Das gegenüberliegende Ende des Bügelhakens ist offen. Wenn nun der Transportbügel in einer Orientierung am Zuförderer hängt, bei der der Steg in Förderrichtung vorauseilt, behindert dieser Steg die Übergabe des Transportbügels an den folgenden Förderer, insbesondere den Abförderer. Die sich dadurch ergebende Problematik wird in der Praxis auf verschiedene Weisen gelöst. Diese Lösungen sind jedoch stets aufwendig und führen nicht immer zu einer ausreichend zuverlässigen Übergabe des Transportbügels von einem Förderer zum anderen. Gelegentlich kommt es vor, dass ein Transportbügel nicht auf den nachfolgenden Förderer gelangt. Ein solcher Transportbügel fällt dann bei der Übergabe herunter. Das ist besonders bei mit einem Bekleidungsstück beladenen Transportbügel problematisch.

Der Erfindung liegt deshalb die Aufgabe zugrunde, ein Verfahren und eine Vorrichtung zur Übergabe eines Transportbügels für Bekleidungsstücke an einen Förderer, insbesondere einen Abförderer, zu schaffen, womit in einfacher Weise eine zuverlässige Übergabe von beliebig orientierten Transportbügeln an den nachfolgenden Förderer möglich ist.

Ein Verfahren zur Lösung dieser Aufgabe weist die Merkmale des Anspruchs 1 auf. Demnach ist vorgesehen, dass der Bügelhaken des Transportbügels beim Abwurf vom Zuförderer von einem mindestens eine kurze Zwischenförderstrecke aufweisenden Zwischenförderer aufgefangen und von dem Zwischenförderer auf den nachfolgenden Förderer transportiert wird. Die Zwischenfördererstrecke hebt die starre Zuordnung zwischen dem Zuförderer und dem nachfolgenden Förderer, insbesondere Abförderer, auf, wodurch auch Transportbügel mit voraneilenden Stegen der Bügelhaken zuverlässig an den nachfolgenden Förderer übergeben werden können, indem die Zwischenförderstrecke, die bevorzugt beweglich ausgeführt ist, auch bei vorauseilendem Steg rechtzeitig zum Abwurf des Transportbügels vom Zuförderer in eine Position zum Auffangen des Bügelhakens gebracht wird, wonach von der Zwischenförderstrecke der Transportbügel mit seinem Bügelhaken zum nachfolgenden Förderer weitertransportiert wird.

Erfindungsgemäß ist somit vorgesehen, dass die mindestens eine Zwischenförderstrecke vom Transportbügel, insbesondere seinem Bügelhaken, vor dem Abwurf vom Zuförderer in eine Position zum Auffangen vorzugsweise des Bügelhakens bewegt wird. Wenn demzufolge der Transportbügel mit voraneilendem Steg des Bügelhakens mit der Zwischenförderstrecke in Kontakt kommt, wird vom weitertransportierten Transportbügel die Zwischenförderstrecke ebenfalls weiterbewegt, wodurch mindestens die nächstfolgende Zwischenförderstrecke sich unter den halbkreisförmig oder U-förmig gebogenen Bügel des Bügelhakens einfädelt und so durch die Ebene des Bügelhakens hindurchtritt. Beim anschließenden Abwerfen des Transportbügels vom Zuförderer wird der Transportbügel am Bügelhaken von mindestens einer Zwischenförderstrecke sozusagen aufgefangen. Von der mindestens einen Zwischenförderstrecke kann nun der Bügelhaken zuverlässig an den nachfolgenden Förderer übergeben werden.

Es ist gemäß einer bevorzugten Ausgestaltung des Verfahrens vorgesehen, dass die jeweilige Zwischenförderstrecke durch Verschwenken um ein Ende in die Position zum Auffangen vorzugsweise des Bügelhakens bewegt wird. Durch das Verschwenken der jeweiligen Zwischenförderstrecke ist es möglich, den vorzugsweise senkrechten Steg des Bügelhakens des jeweiligen Transportbügels zwischen zwei aufeinanderfolgende Zwischenförderstrecken einzufädeln. Während eine am senkrechten Steg des Bügelhakens anliegende Zwischenförderstrecke weiterbewegt wird, wird die darauffolgende Zwischenförderstrecke synchron mitbewegt zur Rückseite des Stegs unter den bogenförmig geformten Bügelhaken. Dadurch gelangt in jedem Fall eine Zwischenförderstrecke unter den bogenförmig geformten oberen Teil des Bügelhakens, und zwar egal, ob dieser mit in Förderrichtung gesehen voraneilendem Steg oder nacheilendem Steg zur Übergabe gelangt.

Bevorzugt erfolgt die Weiterbewegung des Endes jeder Zwischenförderstrecke um eine Drehachse quer zur Längsachse der jeweiligen Zwischenförderstrecke. Dadurch werden die Zwischenförderstrecken wie Arme eines Drehkreuzes verschwenkt bzw. verdreht, wodurch jeweils ein Steg eines Bügelhakens zwischen zwei aufeinanderfolgende stabförmige Zwischenförderstrecken gelangt. Das führt zu einer vereinzelten Übergabe jeweils eines Transportbügels an eine Zwischenförderstrecke des Zwischenförderers. Dabei spielt es für die Zuverlässigkeit der Übergabe keine Rolle, ob der Steg des Bügelhakens in Transportrichtung vor- oder nacheilt.

Bei einer bevorzugten Ausgestaltung des Verfahrens bewegen sich die der mittigen Drehachse gegenüberliegenden freien Enden der Zwischenförderstrecken während der Verschwenkung auf einer Kreisbahn um die Drehachse. Diese Kreisbahn wird von der Förderstrecke des Zuförderers geschnitten oder gekreuzt, wobei nach dem Eintritt der Förderstrecke des Zuförderers in die Kreisbahn vom freien Ende der Zwischenförderstrecke der Transportbügel vom Zuförderer auf wenigstens eine Zwischenförderstrecke des drehkreuzartigen Zwischenförderers abgeworfen und von dieser aufgefangen wird. Weil das Drehkreuz mit den Zwischenförderern vom voraneilenden Steg eines Bügelhakens während des noch vom Zuförderer erfolgenden Weitertransports weiterbewegt wird, schiebt sich der Steg des Transportbügels in den Raum zwischen zwei aufeinanderfolgenden stangenartigen Zwischenfördererstrecken, wodurch der Bügelhaken des jeweiligen abzuwerfenden Transportbügels in den Bereich der Kreisbahn um die freien Enden aller Zwischenförderstrecken eintritt und beim Abwerfen vom Zuförderer der Bügelhaken immer auf eine Zwischenförderstrecke fällt, und zwar entweder eine vor dem Steg des Bügelhakens liegende Zwischenförderstrecke (nacheilender Steg) oder eine nachfolgende Zwischenförderstrecke (voreilender Steg).

Gemäß einer bevorzugten Ausgestaltung des Verfahrens fällt jede längliche, vorzugsweise stangenartige, Zwischenförderstrecke zum freien Ende hin ab. Dadurch kann der Bügelhaken des auf die Zwischenförderstrecke abgeworfenen Transportbügels von der Zwischenförderstrecke abgleiten und auf diese Weise längs der Zwischenförderstrecke über das freie Ende derselben in den Bereich des nachfolgenden Förderers, insbesondere des Abförderers, gelangen. Dazu ist nach einer weiteren Ausgestaltung der Erfindung vorgesehen, die jeweils zur Übergabe des Transportbügels an den Abförderer dienende Zwischenförderstrecke während der Übergabe der Förderstrecke des Abförderers vorzuordnen. So wird vom jeweiligen Zwischenförderer die Förderstrecke des Abförderers zum Zwecke der Übergabe des Transportbügels an denselben momentan verlängert.

Bei einer bevorzugten Weiterbildung des Verfahrens wird in etwa derjenigen Position, in der die Zwischenförderstrecke den Transportbügel vom Zuförderer übernimmt, der Transportbügel an den Abförderer übergeben. So ist es möglich, in einer Stellung des Zwischenförderers, in der eine Zwischenförderstrecke desselben die Förderstrecke des Abförderers verlängert, das Übernehmen des Transportbügels vom Zwischenförderer und das Weiterleiten des Transportbügels von der den Transportbügel übernehmenden Zwischenförderstrecke auf die Förderstrecke des Abförderers bei stillstehendem Zwischenförderer durchzuführen, wodurch die Zwischenförderstrecke, auf die der Transportbügel beim Abwurf vom Zuförderer gelangt, in einer sich nicht ändernden Relativposition zum darauffolgenden Förderer, insbesondere Abförderer, verbleibt. Es kann so der Transportbügel von der momentan die Förderstrecke des Abförderers verlängernden Zwischenförderstrecke abgleiten auf den nachfolgenden Förderer, insbesondere den Abförderer.

Eine Vorrichtung zur Lösung der eingangs genannten Aufgabe weist die Merkmale des Anspruchs 8 auf. Vor allem kann der Transportbügel mit in Förderrichtung des Zuförderers voraneilendem Steg des Bügelhakens durch Anlage vor einer Zwischenförderstrecke mindestens die nachfolgende Zwischenförderstrecke in eine Position bringen, die geeignet ist, den vom Zuförderer abgeworfenen Transportbügel mit dem Bügelhaken zur Förderstrecke des nachfolgenden Förderers, insbesondere Abförderers, zu leiten.

Die Zwischenförderstrecken des Zwischenförderers sind derart der Förderstrecke des Zuförderers zugeordnet, dass mindestens eine Zwischenförderstrecke zur Übernahme des Transportbügels, insbesondere eines Bügelhalkens desselben, die Förderstrecke des Zuförderers schneidet. Dadurch gelangt der vom Zuförderer abgeworfene Transportbügel mit seinem Bügelhaken auf mindestens eine Zwischenförderstrecke, von der der Transportbügel zuverlässig an die Förderstrecke des nachfolgenden Förderers überführt werden kann.

Bevorzugt ist vorgesehen, zur Übergabe des Transportbügels vom Zwischenförderer an insbesondere den Abförderer die Förderstrecke desselben durch mindestens eine Zwischenförderstrecke zu verlängern. Dabei überlappt bevorzugt ein Endbereich der mindestens einen zur Übergabe dienenden Zwischenförderstrecke einen Anfangsbereich der Förderstrecke des nachfolgenden Förderers. Dadurch ist eine unter allen Umständen zuverlässige Übergabe eines einzelnen oder vereinzelten Transportbügels mit oder ohne einem Bekleidungsstück an die Förderstrecke des nachfolgenden Förderers gewährleistet. Dabei befindet sich vorzugsweise der Endbereich der jeweiligen Zwischenförderstrecke über dem Anfangsbereich der Förderstrecke des nachfolgenden Förderers, wodurch die Übergabe schwerkraftbedingt ohne einen Antrieb des Zwischenförderers erfolgen kann, indem der Bügelhaken des Transportbügels von der mindestens einen Zwischenförderstrecke, an der der Bügelhaken zur Übergabe hängt, heruntergleiten kann auf die Förderstrecke des nachfolgenden Förderers, insbesondere Abförderers.

Erfindungsgemäß ist somit vorgesehen, dass die Zwischenförderstrecken des Zwischenförderers von länglichen Armen gebildet sind, die eine stern- bzw. spinnenartige Relativanordnung zueinander aufweisen. Die länglichen Arme können sich durch die Ebene des Bügelhakens hindurchbewegen, wodurch bei jeder beliebigen Orientierung des Transportbügels am Zuförderer gewährleistet ist, dass ein von demselben abgeworfener Transportbügel mit dem Bügelhaken auf mindestens eine als länglicher Arm ausgebildete Zwischenförderstrecke gelangt.

Bevorzugt ist vorgesehen, dass alle Arme zur Bildung der Zwischenförderstrecken mit einem Ende in einem Mittelpunkt des Zwischenförderers verbunden sind. So lassen sich alle Förderstrecken bzw. Arme des Zwischenförderers gleichermaßen zusammen fortbewegen. Wenn demnach ein länglicher Arm von einem vorauseilenden Steg eines Bügelhakens weiterbewegt wird, folgen dieser Bewegung die anderen länglichen Arme. Dadurch kann mindestens ein Arm zur Bildung einer Zwischenförderstrecke auch bei voraneilendem Steg des Bügelhakens unter den Bügelhaken gelangen und dadurch eine zuverlässige Überführung des Transportbügels an den folgenden Förderer vornehmen.

Die die Zwischenförderstrecken bildenden länglichen Arme des Zwischenförderers verlaufen vom Mittelpunkt desselben aus radial nach außen. Bevorzugt liegen dann die freien Enden der vorzugsweise stangenartig ausgebildeten Arme auf einer gedachten Kreisbahn, die konzentrisch um den Mittelpunkt des Zwischenförderers herum verläuft. Dadurch ist der Zwischenförderer nach Art eines Drehkreuzes ausgebildet, das eine im Mittelpunkt liegende vorzugsweise aufrechte oder leicht geneigte Drehachse aufweist, um die alle länglichen, stangenartigen Arme gleichzeitig drehbar sind. Das Drehkreuz verfügt über eine Mehrzahl gleich ausgebildeter Arme. Die Anzahl der Arme kann im Bereich zwischen 3 und 16 liegen, wobei die Summe aller Arme eine gerade oder eine ungerade Zahl sein kann. Durch Verdrehung des Drehkreuzes um die Drehachse werden alle radial von der Drehachse nach außen laufenden Arme gleichzeitig verschwenkt. Dabei schneiden einige Arme, vorzugsweise nur ein Arm oder auch zwei oder drei Arme, die Förderstrecke des Zuförderers, indem zwischen zwei aufeinanderfolgenden Arme der Steg des Bügelhakens des jeweiligen Transportbügels gelangt. Dadurch ist sichergestellt, dass bei beliebiger Orientierung des Transportbügels am Zuförderer der U-förmig umgebogene obere Teil des Bügelhakens beim Abwerfen des Transportbügels vom Zuförderer stets auf einen länglichen stangenartigen Arm gelangt.

Es ist des Weiteren vorgesehen, dass alle Arme ausgehend vom Mittelpunkt oder der Drehachse des Drehkreuzes zu den freien äußeren Enden hin geneigt verlaufen. Dadurch fallen die Arme zu ihren freien Enden hin ab, wodurch ein Bügelhaken von dem mindestens einen Arm, auf dem er hängt, zur Übergabe auf den nachfolgenden Förderer der Schwerkraft folgend abgleiten kann und dadurch zuverlässig auf die Förderstrecke des nachfolgenden Förderers, insbesondere des Abförderers, gelangt.

Gemäss der Erfindung ist der Zwischenförderer mit den Armen um die Drehachse frei drehbar. Demzufolge braucht das Drehkreuz keinen eigenen Antrieb aufzuweisen. Das Drehkreuz wird verdreht und dabei die Arme desselben verschwenkt durch den Steg des Bügelhakens während des Weitertransports des Transportbügels am Zuförderer. In dem Moment, in dem mindestens ein Arm die zur Übergabe des Transportbügels an den nachfolgenden Förderer erforderliche Relativposition zur Förderstrecke des nachfolgenden Förderers erlangt hat, wird der Transportbügel vom Zuförderer abgeworfen. Daran kommt das Drehkreuz zum Stillstand, so dass die Arme desselben sich nicht mehr weiterbewegen. Dabei gelangt der Bügelhaken auf mindestens einen Arm des Drehkreuzes, von dem er abgleitet zur Übergabe an die Förderstrecke des nachfolgenden Förderers.

Weitere vorteilhafte Ausgestaltungen des Verfahrens und der Vorrichtung ergeben sich aus den Unteransprüchen.

Ein bevorzugtes Ausführungsbeispiel der Erfindung wird nachfolgend anhand der Zeichnung näher erläutert. In dieser zeigen:

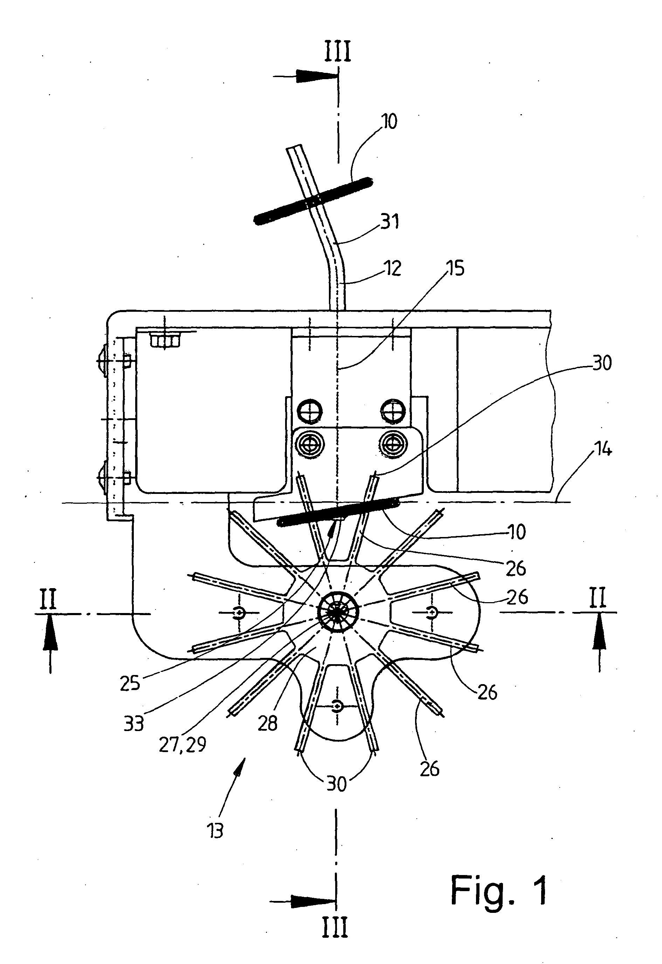

- Fig. 1: eine Draufsicht auf die erfindungsgemäße Vorrichtung,

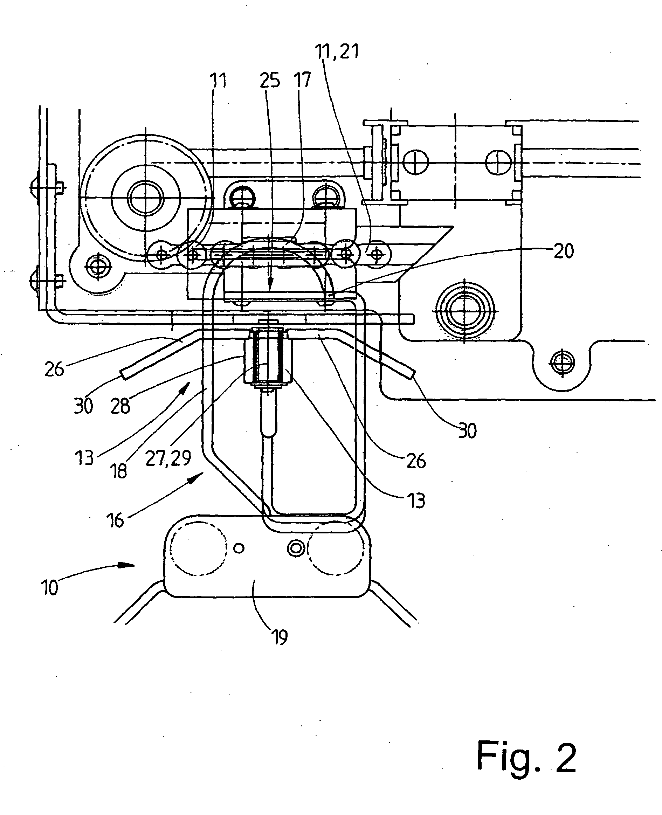

- Fig. 2: einen Querschnitt II-II durch die Vorrichtung der Fig. 1,

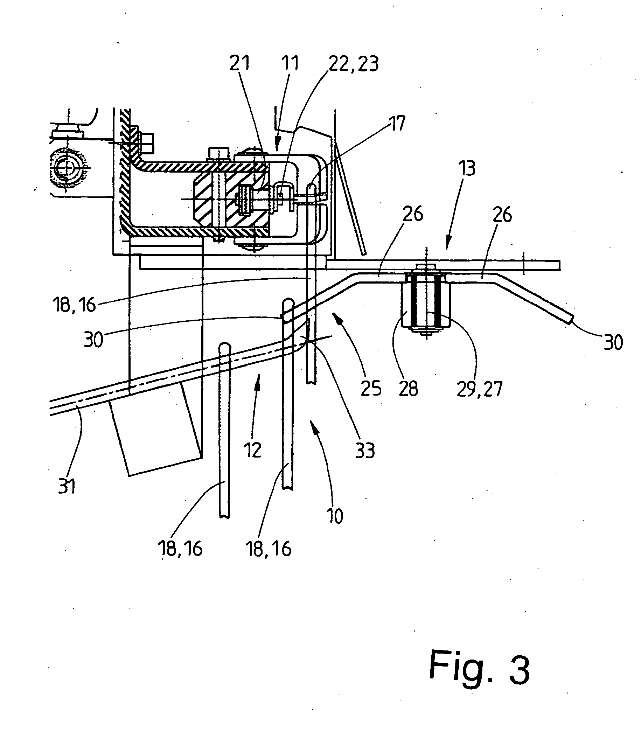

- Fig. 3: einen Querschnitt III-III durch die Vorrichtung der Fig. 1,
- Fig. 4: eine schematische Draufsicht auf die Vorrichtung zur Übergabe eines Trans- portbügels mit voraneilendem Steg des Bügelhakens,
- Fig. 5: eine Draufsicht analog zur Fig. 5 mit weiterbewegtem Transportbügel,
- Fig. 6: eine Draufsicht auf die Vorrichtung der Fig. 4 und 5 mit in Übergabestellung sich befindendem Transportbügel,
- Fig. 7: eine Draufsicht auf die Vorrichtung zur Übergabe eines Transportbügels mit nacheilendem Steg am Bügelhaken, und
- Fig. 8: die Vorrichtung der Fig. 7 mit dem in der Übergabestellung sich befindlichen Transportbügel.

Die Erfindung wird nachfolgend erörtert am Beispiel der Übergabe eines Transportbügels 10 für in den Figuren nicht gezeigte Bekleidungsstücke, wie beispielsweise Kittel, Hemden, Jacken oder dergleichen. Es geht bei der Erfindung um die Übergabe des Transportbügels 10 von einem Zuförderer 11 zu einem nachfolgenden Förderer, im gezeigten Ausführungsbeispiel einem Abförderer 12. Diese Übergabe wird unterstützt durch einen Zwischenförderer 13, der die Förderstrecke 14 des Zuförderers 11 und die Förderstrecke 15 des Abförderers 12 quasi überbrückt. Der Zwischenförderer 13 verfügt über mehrere verschwenkbare Zwischenförderstrecken. Mindestens eine Zwischenförderstrecke fördert sich zur Übergabe des Transportbügels an den Abförderer 12 in die Ebene eines Bügelhakens 16 des Transportbügels 10 ein. Der Bügelhaken 16 weist einen bogenförmig gebogenen Haken 17 und einen etwa senkrecht verlaufenden länglichen Steg 18 auf. Der Steg 18 verbindet ein Ende des Hakens 17 mit einem Unterteil 19 des Transportbügels 10, das zum Aufhängen des Bekleidungsstücks dient. Der Steg ist an einem Ende des Hakens 17 einstückig angeformt, so dass der Haken 17 an einem Ende vom Steg 18 fortgesetzt wird zur Bildung des Bügelhakens 16. Ein dem Steg 18 gegenüberliegendes Ende des Hakens 17 ist als ein freies Ende 20 ausgebildet, das mit Abstand seitlich neben dem Steg 18 liegt.

Der Zuförderer 11 weist im gezeigten Ausführungsbeispiel ein umlaufend angetriebenes Zugorgan auf, bei dem es sich im vorliegenden Falle um eine endlose Förderkette 21 handelt. Mit gleichmäßigem Abstand sind an der Förderkette 21 seitlich vorstehende Tragorgane, beispielsweise horizontale Bolzen 22, angeordnet. Jeder Bolzen 22 verfügt auf seiner von der Förderkette 21 wegweisenden Seite über ein freies Ende 23. Am Bolzen 22 ist jeweils ein Transportbügel 10 am Zuförderer 11 angehängt. Der am Bolzen 22 hängende Transportbügel 10 wird so vom angetriebenen Zuförderer 11 entlang seiner Förderstrecke 14 weiterbewegt. Diese Förderstrecke 14 kann einen beliebigen Verlauf aufweisen, insbesondere in Förderrichtung 24 horizontal oder leicht ansteigend verlaufen.

Die Transportbügel 10 können in unterschiedlicher Orientierung auf dem Bolzen 22 des Zuförderers 11 hängen. Entweder eilt der senkrechte Steg 18 des Bügelhakens 16 in Förderrichtung 14 vor oder nach. Beim voreilenden Steg 18 befindet sich dieser in Förderrichtung 24 gesehen vor dem Bolzen 22. Hingegen befindet sich der nacheilende Steg 18 in Förderrichtung 24 gesehen hinter dem Bolzen 22.

An einer Übergabestelle 25 ist der Zwischenförderer 13 mit erfindungsgemäß mehreren verschwenkbaren Zwischenförderstrecken angeordnet. Im gezeigten Ausführungsbeispiel sind alle Zwischenförderstrecken gleich ausgebildet, nämlich jeweils aus einem länglichen, stangenartigen Arm 26 gebildet. Jeder Arm 26 bildet auf diese Weise eine Zwischenförderstrecke. Alle Arme 26 sind stern- oder spinnenartig zueinander angeordnet, verlaufen nämlich von einem Mittelpunkt 27 des Zwischenförderers 13 aus radial nach außen. Alle Arme 26 sind an ihren zum Mittelpunkt 27 weisenden innenliegenden Enden mit einem Mittelteil 28 des Zwischenförderers 13 fest verbunden. Durch die sternförmige bzw. spinnenförmige Anordnung der Arme 26 erhält der Zwischenförderer 13 die Gestalt eines Drehkreuzes. Das Drehkreuz ist um eine durch den Mittelpunkt 27 verlaufende Drehachse 29 verdrehbar. Die Drehachse 29 verläuft im gezeigten Ausführungsbeispiel etwa senkrecht. Das Drehkreuz des Zwischenförderers 23 wird um die Drehachse 29 nicht angetrieben; es ist vielmehr um die Drehachse 29 nur frei drehbar. Der hier gezeigte drehkreuzartige Zwischenförderer 13 verfügt über zwölf gleichermaßen ausgebildete Arme 26. Die zwölf Arme 26 sind um gleiche Winkel voneinander beabstandet. Beim hier gezeigten Drehkreuz mit zwölf Armen 26 beträgt der Winkel zwischen jeweils zwei benachbarten Armen 26 stets 30°. Es ist aber auch denkbar, dass der Zwischenförderer 13 je nach Größe des Bügelhakens 16 des Transportbügels 10 eine größere oder kleinere Anzahl an Armen 26 aufweist. Es kann sich dabei um eine gerade oder auch ungerade Anzahl von Armen 26 handeln.

Vom Mittelpunkt 27 weggerichtete äußere freie Enden aller Arme 26 liegen auf einer gemeinsamen, gedachten Kreisbahn, die konzentrisch zum Mittelpunkt 27 bzw. zur Drehachse 29 des drehkreuzartigen Zwischenförderers 13 verläuft. Alle der gleich ausgebildeten Arme 26 sind als dünne, längliche Stangen oder auch Rohre ausgebildet. Die Arme 26 sind so mit dem auf dem Mittelpunkt 27 bzw. der Drehachse 29 liegenden Mittelteil 28 verbunden, sodass die freien Enden 30 aller Arme 26 unter dem Mittelteil 28 liegen. Dadurch verlaufen alle Arme 26 zu ihren freien Enden 30 hin abwärts, so dass die Arme 26 abfallende Zwischenförderstrecken bilden, an denen der jeweilige Transportbügel 10 mit dem Haken 17 zum freien Ende 30 hin abgleiten kann. Die hier gezeigten Arme 26 verfügen ausgehend vom Mittelteil 28 über einen kurzen horizontalen Abschnitt und einen sich daran anschließenden schräggerichteten Endabschnitt. Es ist auch denkbar, die Arme 26 vollständig gerade oder bogenförmig auszubilden. Aufgrund der gegenüber dem Mittelpunkt 27 tieferliegenden freien Enden 30 der Arme 26 hat das den Zwischenförderer 13 bildende Drehkreuz eine schirmartige Gestalt.

An den als Drehkreuz ausgebildeten Zwischenförderer 13 schließt der Abförderer 12 an. Im gezeigten Ausführungsbeispiel ist der Abförderer 12 wie die Arme 26 als Schwerkraftförderer ausgebildet, das heißt, die Förderstrecke 15 des Abförderers 12 ist gebildet aus einer Schiene 31 mit einem in Förderrichtung 32 des Abförderers 12 abwärtsgerichteten Verlauf. Die Schiene 31 ist im einfachsten Falle wie die Arme 26 als eine Stange oder ein Rohr ausgebildet. Der Verlauf der Schiene 31 in Förderrichtung 32 des Abförderers 12 kann beliebig sein. Je nach Ausgestaltung der Schiene 31 kann so der Abförderer 12 beliebige Förderstrecken 15 aufweisen.

Das zum drehkreuzartigen Zwischenförderer 13 weisende freie Ende 33 der Schiene 31 des Abförderers 12 ragt mit einem Endbereich in den gedachten Kreis um die freien Enden 30 der Arme 26 hinein. Ein vom freien Ende 33 der Schiene 31 des Abförderers 12 ausgehender Endbereich desselben überlappt somit den Endbereich eines Arms 26 oder zweier benachbarter Arme 26 in der Nähe der Schiene 31. Der vom freien Ende 33 der Schiene 31 ausgehende Endbereich derselben ist außerdem etwas unterhalb der Ebene, in der die Arme 26 liegen, angeordnet. Auf diese Weise können die Arme 26 über den diese überlappenden Endbereich der Schiene 31 des Abförderers 12 vorbeilaufen. Durch die beschriebene Relativanordnung des Abförderers 12 zum drehkreuzartigen Zwischenförderer 13 bildet mithin ein Arm 26 oder zwei benachbarte Arme 26 eine Verlängerung des Abförderers 12 in Richtung zum Mittelpunkt 27 bzw. der Drehachse 29 des drehkreuzartigen Zwischenförderers 13.

Das Verfahren gemäß der Erfindung läuft wie folgt ab:

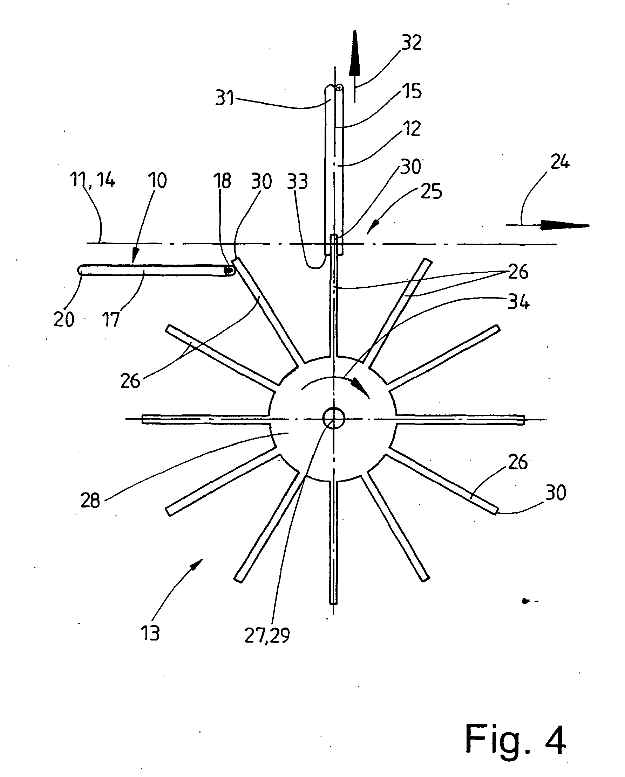

Die Fig. 4 bis 6 erläutern das Verfahren für den Fall der Orientierung des am Zuförderers 11 hängenden Transportbügels 10 mit in Förderrichtung 24 voraneilendem Steg 18 des Bügelhakens 16. Dieser Steg 18 ist zu Zwecken der Verdeutlichung in den Fig. 4 bis 6 durch einen schwarzen Kreis symbolisiert. Die Förderstrecke 14 des Zuförderers 11 ist in den Fig. 4 bis 6 lediglich durch eine punkt-strich-linierte gerade Linie angedeutet. Der Bolzen 22 an der Förderkette 21 des Zuförderers 11, worauf der Haken 11 des Transportbügels 10 während des Weitertransports vom Zuförderer 11 in Förderrichtung 24 hängt, ist in den Fig. 4 bis 6 aus Vereinfachungsgründen nicht dargestellt. Vom Abförderer 12 ist in den Fig. 4 bis 6 nur ein vom freien Ende 33 ausgehender Endbereich eingezeichnet.

In der Fig. 4 ist dargestellt, dass bei der Förderung des Transportbügels 10 vom Zuförderer 11 in Förderrichtung 24 der vorauseilende Steg 18 des Bügelhakens 16 zur Anlage vor einen Arm 26 des drehkreuzartigen Zwischenförderers 13 gelangt. Dieser Arm 26 befindet sich in Förderrichtung 24 des Zuförderers 11 um eine Teilung zwischen zwei Armen 26 vor demjenigen vorangehenden Arm 26, der momentan die Förderstrecke 15 des Abförderers 12 verlängert, also hiermit auf einer gemeinsamen Linie liegt.

Beim Weitertransport des Transportbügels 10 vom Zuförderer 11 in Förderrichtung 24 schiebt der Steg 18 des Transportbügels 10 den Arm 26, vor dem er anliegt, vor sich her. Dabei erfolgt vom Steg 18 des Transportbügels 10 aus eine Verdrehung des gesamten als Drehkreuz ausgebildeten Zwischenförderers 13 im Uhrzeigersinn, nämlich in Drehrichtung 34.

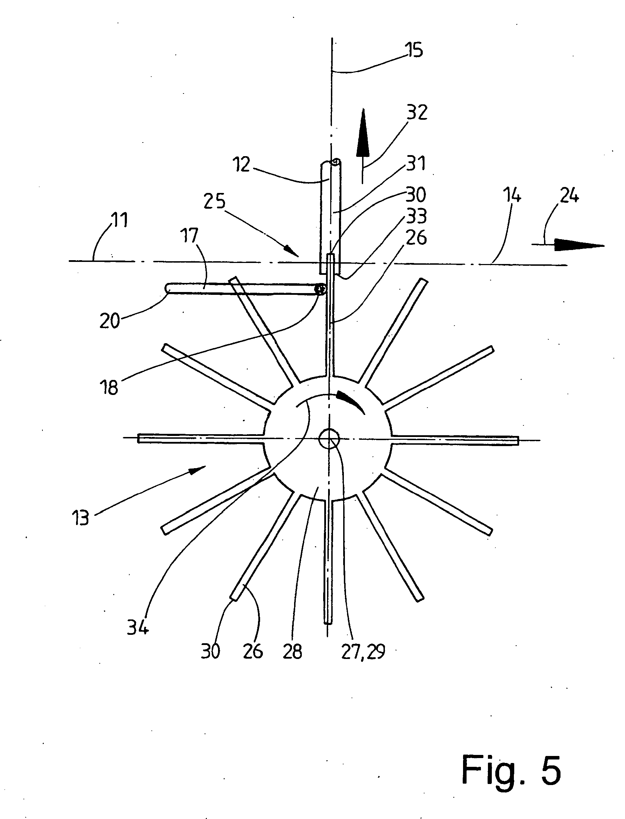

Die Fig. 5 zeigt den Zwischenförderer 13 in einen um die Teilung der Arme 26, also im gezeigten Ausführungsbeispiel etwa 30°, in Drehrichtung 34 um die vertikale Drehachse 29 weitergedrehten Zustand. Dabei gelangt der Arm 26, an dem der Steg 18 anliegt, in Deckung zur Längsachse der Förderstrecke 15 des Abförderers 12, verlängert diese also. Während der Weiterbewegung des drehkreuzartigen Zwischenförderers 13 um 30° (vgl. Fig. 4 und 5) gelangt der in Drehrichtung 34 gesehen dem Arm 26, an dem der Steg 18 anliegt, nachfolgende Arm 26 unter dem bogenförmigen Haken 17 des Bügelhakens 16 des Transportbügels 10. Dabei kreuzt der Arm 26 die vertikale Ebene des Bügelhakens 16 (Fig. 5). Das freie Ende 30 des Arms 26 befindet sich dadurch auf der zur Förderstrecke 14 des Zuförderers 11 weisenden Rückseite des Bügelhakens 16.

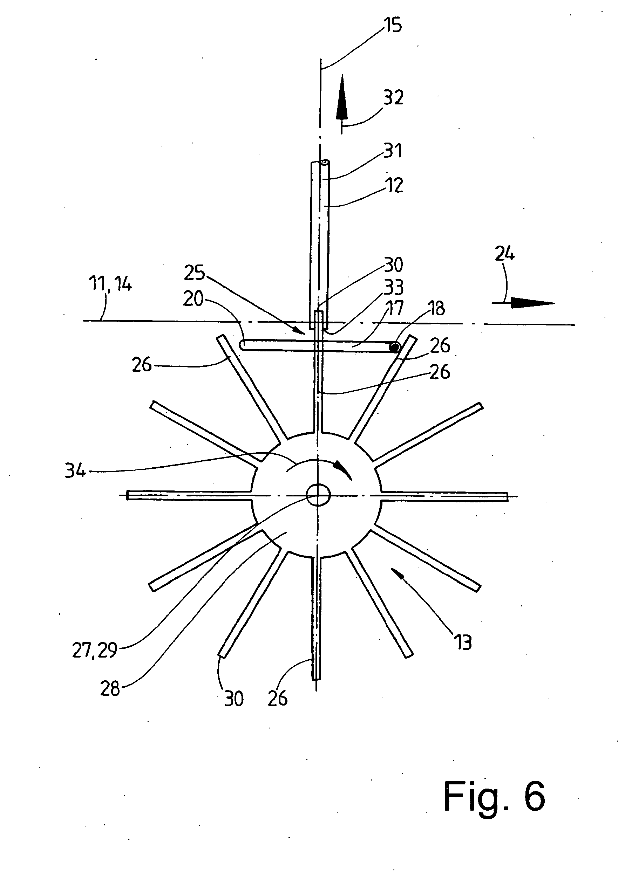

Bei der Weiterförderung des Transportbügels 10 auf der Förderstrecke 14 des Zuförderers 11 in Förderrichtung 24 wird der drehkreuzartige Zwischenförderer 13 wiederum um eine Teilung der Arme 26, nämlich im gezeigten Ausführungsbeispiel etwa 30°, in Drehrichtung 34 weitergedreht, indem der Steg 18 des Transportbügels 10 den Arm 26, an dem er anliegt, weiter vor sich her schiebt. Dabei gelangt der in die Ebene des Bügelhakens 16 eingefädelte nächstfolgende Arm 26 in Deckung zum Abförderer 12, indem nämlich die Längsachse des Arms 26 auf der Längsachse des Abförderers 12 liegt und somit den Abförderer 12 über das freie Ende 33 seiner Schiene 31 entgegen seiner Förderrichtung 32 verlängert. Hierbei überlappt ein freier Endbereich des Arms 26 einen freien Endbereich der Schiene 31 des Abförderers 12, wobei der freie Endbereich des Arms 26 etwas über dem Endbereich der Schiene 31 des Abförderers 12 sich befindet, wodurch der Arm 26 über dem freien Endbereich des Abförderers 12 hinweglaufen kann. Hierbei befindet sich der den Abförderer 12 verlängernde Arm 26 etwa mittig unter dem Haken 17 des Transportbügels 10, wobei der Arm 26 die vertikale Ebene des Bügelhakens 16 des Transportbügels 10 etwa rechtwinklig schneidet (Fig. 6).

Haben der Transportbügel 10 und der drehkreuzartige Zwischenförderer 13 die in der Fig. 6 gezeigte Position erreicht, wird beispielsweise durch Zurückziehen des den Transportbügel 10 an der Förderkette 21 des Zuförderers 11 haltenden Bolzens 22 der Transportbügel 10, nämlich sein Bügelhaken 16, vom Zuförderer 11 abgeworfen. Der Transportbügel 10 mit dem Bügelhaken 16 fällt dann etwas herunter auf den sich mittig unter dem Haken 17 des Transportbügels 10 befindlichen Arm 26 des drehkreuzartigen Zwischenförderers 13. Infolge des zum Abförderer 12 hin geneigten Verlaufs des Arms 26 (und auch der übrigen Arme 26 des Zwischenförderers 13) gleitet der Haken 17 des Transportbügels 10 vom Arm 26 in Richtung seines freien Endes 30 herunter. Infolge der Überlappung des Endbereichs des Arms 26 mit dem zum Arm 26 weisenden Endbereich der Schiene 31 des Abförderers 12 rutscht der Transportbügel 10 mit dem Haken 17 auf den unter dem freien Ende 30 des Arms 26 liegenden freien Endbereich der Schiene 31 des Abförderers 12. Weil bei dem gezeigten Ausführungsbeispiel auch die Schiene 31 des Abförderers 12 schräggerichtet ist, gleitet der vom Zwischenförderer 13 auf den Abförderer 12 übergebende Transportbügel 10 mit seinem Haken 17 nun entlang der Förderstrecke 15 des Abförderers 12 auf der Schiene 31 desselben in Förderrichtung 32 zur nachfolgenden Bearbeitungsstation, einem Speicher oder dergleichen.

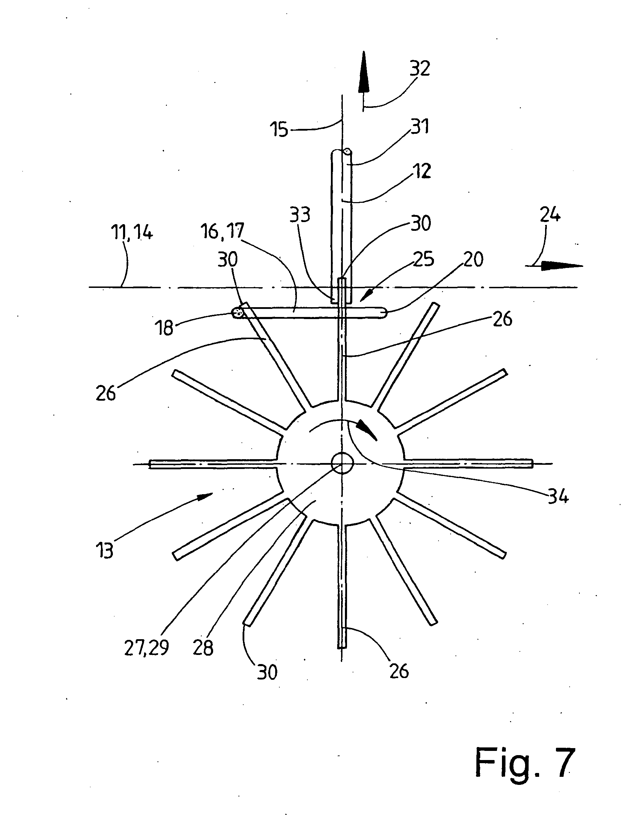

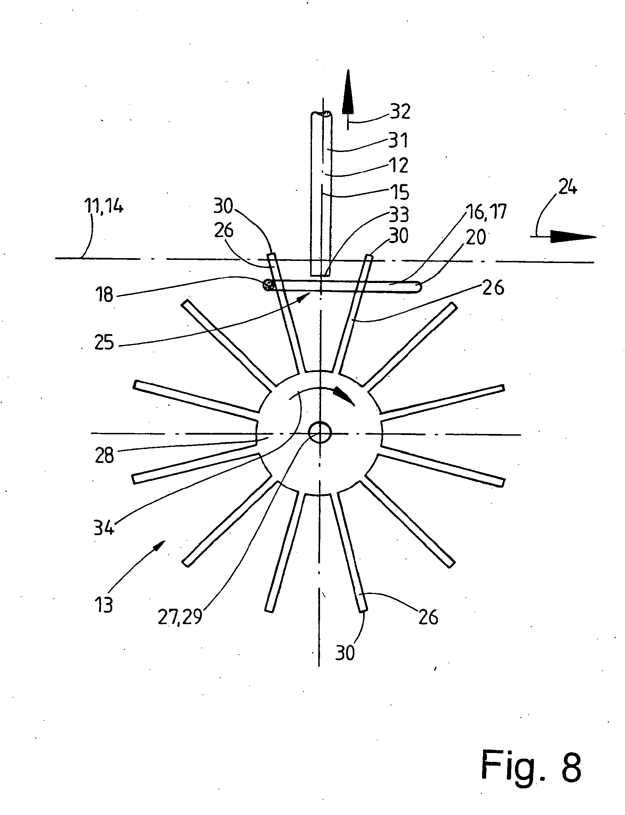

Die Fig.7 und 8 zeigen schematisch die Übergabe eines Transportbügels 10 vom Zuförderer auf den Abförderer 12 bei einer entgegengesetzten Orientierung des an der Förderkette 21 des Zuförderers 11 hängenden Transportbügels 10. Hier eilt der Steg 18 des Bügelhakens 16 in Förderrichtung 24 des Zuförderers 11 nach. Das heißt, der gebogene Haken 17 des Bügelhakens 16 befindet sich in Förderrichtung 24 gesehen vor dem senkrechten Steg 18 des Bügelhakens 16. Demzufolge kann der Haken 17 beim Weitertransport des Transportbügels 10 vom Zuförderer 11 längs seiner Förderstrecke 14 in Förderrichtung 24 über zwei aufeinanderfolgende Arme 26 des als Drehkreuz ausgebildeten Zwischenförderers gelangen, bevor der senkrechte Steg 18 hinter einem Arm 26 anschlägt. Diese Situation ist in der Fig. 7 gezeigt, wobei der Steg 18 wieder durch einen vollständig geschwärzten Kreis symbolisiert ist. Im Gegensatz zum vorauseilenden Steg 18 ist im Falle des nacheilenden Stegs 18 kein Einfädeln eines auf den vor sich her geschobenen Arm 26 nachfolgenden Arms 26 in die Ebene des Bügelhakens 16 notwendig. Der Haken 17 gelangt wegen des nacheilenden Stegs 18 unmittelbar über zwei aufeinanderfolgende Arme 26. Dabei schneiden diese Arme 26 mit unterschiedlichen Winkeln die Ebene des Bügelhakens 16 (Fig. 7).

Grundsätzlich könnte in der in der Fig. 7 gezeigten Stellung des Zwischenförderers 13 schon der Transportbügel 10 vom Zuförderer 11 abgeworfen werden, weil schon ein Arm 26 die Förderstrecke 15 des Abförderers 12 verlängert und beim Abwerfen des Transportbügels 10 vom Zwischenförderer 13 der Bügelhaken 16 auf diesen und gegebenenfalls den nachfolgenden Arm 26, an dem der Steg 18 des Bügelhakens 16 anliegt, gelangt. Der Bügelhaken 16 kann dann von beiden Armen 26 aufgefangen werden und durch Abrutschen von den Armen 26, insbesondere den die Förderstrecke 15 des Abförderers 12 momentan verlängernden Arms 26, auf den diesen Arm 26 überlappenden Endbereich der Schiene 31 des Abförderers 12 gelangen.

Bevorzugt wird der mit dem nacheilenden Steg 18 an einen Arm 26 anschlagenden Transportbügel 10 vom Zuförderer 11 noch etwas entlang der Förderstrecke 14 weitertransportiert und dabei das Drehkreuz des Zwischenförderers 13 in Drehrichtung 34 weiterbewegt, und zwar vorzugsweise nur um eine halbe Teilung zwischen zwei Armen 26, also etwa 15°. Dann befindet sich der in die Kreisbahn der freien Enden 30 der Arme 26 hineinragende Endbereich der Förderstrecke 15 des Abförderers 12 etwa mittig zwischen zwei benachbarten Armen 26 (Fig. 8). Wird nun der Transportbügel 10 vom dem ihn bisher tragenden Bolzen 22 auf der Förderkette 21 des Zuförderers 11 abgekoppelt, fällt der Transportbügel 10 mit dem Haken 17 auf beide benachbarte Arme 26, wodurch der Haken 17 mittig vor der Förderstrecke 15 des Abförderers 12 positioniert ist. Durch Herabgleiten von beiden Armen 26 gelangt der Haken 17 des Transportbügels 10 über das unter den Armen 26 liegende freie Ende 30 der Schiene 31 des Abförderers 12 hinweg, wodurch eine zuverlässige Übergabe des Transportbügels 10 mit einem daran hängenden Bekleidungsstück oder auch eines leeren Transportbügels 10 vom drehkreuzartigen Zwischenförderer 13 auf den Abförderer 12 gewährleistet ist. Die beiden aufeinanderfolgenden Arme 26 brauchen nicht, wie in der Fig. 8 idealisiert dargestellt ist, eine Relativposition zum Endbereich der Schiene 31 des Abförderers 12 aufzuweisen, dass dieser Endbereich mittig zwischen den Armen 26 liegt, es reicht auch, wenn der Endbereich der Schiene 31 des Abförderers 12 irgendwo zwischen den Armen 26 sich befindet, wobei der Abstand zu den gegenüberliegenden Armen 26 unterschiedlich sein kann.

Die zuvor beschriebenen erfindungsgemäßen Verfahren sind mit beliebig ausgestalteten Transportbügeln, auch solchen mit einer Klammer für zum Beispiel Hosen, durchführbar.

### Bezugszeichenliste:

- 10: Transportbügel
- 11: Zuförderer
- 12: Abförderer
- 13: Zwischenförderer
- 14: Förderstrecke
- 15: Förderstrecke
- 16: Bügelhaken
- 17: Haken
- 18: Steg
- 19: Unterteil
- 20: freies Ende
- 21: Förderkette
- 22: Bolzen
- 23: freies Ende
- 24: Förderrichtung
- 25: Übergabestelle
- 26: Arm
- 27: Mittelpunkt
- 28: Mittelteil
- 29: Drehachse
- 30: freies Ende
- 31: Schiene
- 32: Förderrichtung
- 33: freies Ende
- 34: Drehrichtung

## Patentansprüche

1. Verfahren zum Übergeben eines Transportbügels (10) für Bekleidungsstücke von einem Zuförderer (11) an einen nachfolgenden Förderer, insbesondere einen Abförderer (12), wobei der mit einem Bügelhaken (16) am Zuförderer (11) hängende Transportbügel (10) vom Zuförderer (11) abgeworfen, beim Abwurf vom Zuförderer (11) von einem Zwischenförderer (13) aufgefangen wird und zum Weitertransport der Transportbügel (10) auf den nachfolgenden Förderer aufgehängt wird, **dadurch gekennzeichnet, dass** der Bügelhaken (16) des Transportbügels (10) beim Abwurf vom Zuförderer (11) von mindestens einer kurzen Zwischenförderstrecke des Zwischenförderers (13) aufgefangen und von der Zwischenförderstrecke auf den nachfolgenden Förderer übergeben wird, wobei die mindestens eine Zwischenförderstrecke vom Transportbügel (10) vor seinem Abwurf vom Zuförderer (11) in eine Position zum Auffangen eines Bügelhakens (16) bewegt wird.

2. Verfahren nach Anspruch 1, **dadurch gekennzeichnet, dass** mindestens eine Zwischenförderstrecke durch Verschwenken um ein Ende in die Position zum Auffangen vorzugsweise des Bügelhakens (16) bewegt wird, insbesondere das Verschwenken der mindestens einen Zwischenförderstrecke um eine Drehachse (29) quer zur Längsachse der mindestens einen Zwischenförderstrecke erfolgt.

3. Verfahren nach Anspruch 1 oder 2, **dadurch gekennzeichnet, dass** ein der Drehachse (29) gegenüberliegendes freie Ende (30) der mindestens einen Zwischenförderstrecke während der Verschwenkung derselben auf einer Kreisbahn um die Drehachse (29) bewegt wird und diese Kreisbahn die Förderstrecke (14) des Zuförderers (11) schneidet, vorzugsweise kreuzt, wobei nach dem Eintritt eines Transportbügels (10), insbesondere eines Bügelhakens (16) desselben, in die Kreisbahn der freien Enden (30) der Zwischenförderstrecken der Transportbügel (10) vom Zuförderer (11) auf mindestens eine Zwischenförderstrecke des Zwischenförderers (13) abgeworfen wird.

4. Verfahren nach Anspruch 3, **dadurch gekennzeichnet, dass** jede Zwischenförderstrecke des Zwischenförderers (13) zum freien Ende (30) hin abfällt zum Abgleiten des Bügelhakens (16) des Transportbügels (10) längs der mindestens einen Zwischenförderstrecke über das freie Ende (30) derselben.

5. Verfahren nach einem der vorhergehenden Ansprüche, **dadurch gekennzeichnet, dass** die mindestens eine zum Übergeben des Transportbügels (10) an die Förderstrecke (15) des nachfolgenden Förderers (Abförderer 12) dienende Zwischenförderstrecke während der Übergabe an den nachfolgenden Förderer (Abförderer 12) der Förderstrecke (15) desselben momentan vorgeordnet wird.

6. Verfahren nach einem der vorhergehenden Ansprüche, **dadurch gekennzeichnet, dass** etwa in der Position, in der die mindestens eine Zwischenförderstrecke den Transportbügel (10) vom Zuförderer (11) übernimmt, der Transportbügel (10) an den nachfolgenden Förderer (Abförderer 12) übergeben wird.

7. Verfahren nach Anspruch 4, **dadurch gekennzeichnet, dass** der Bügelhaken (16) des Transportbügels (10) durch Abgleiten über das freie Ende (30) mindestens einer Zwischenförderstrecke auf die Förderstrecke (15) des nachfolgenden Förderers (Abförderer 12) übergeben wird, insbesondere durch Aufgleiten des von der mindestens einen Zwischenförtierstrecke abgleitenden Bügelhakens (16) des Transportbügels (10) auf die vorzugsweise in Förderrichtung (32) entsprechend abwärts geneigt verlaufende Förderstrecke (15) des nachfolgenden Förderers (Abförderer 12).

8. Vorrichtung zur Übergabe eines Transportbügels (10) für Bekleidungsstücke von einem Zuförderer (11) an einen nachfolgenden Förderer, insbesondere einen Abförderer (12), mit einem zwischen dem Zuförderer (11) und dem nachfolgenden Förderer angeordneten Zwischenförderer (13), **dadurch gekennzeichnet, dass** der Zwischenförderer (13) mehrere gemeinsam bewegbare Zwischenförderstrecken aufweist, die Zwischenförderstrecken des Zwischenförderers (13) durch stern- bzw. spinnenartig orientierte längliche Arme (26) gebildet sind, indem von einem auf einer Drehachse (29) liegenden Mittelpunkt (27) des Zwischenförderers (13) aus alle Arme (26) der Zwischenförderstrecken radial nach außen verlaufen und der Zwischenförderer (13) mit den Armen (26) um die Drehachse (29) frei drehbar ist.

9. Vorrichtung nach Anspruch 8, **dadurch gekennzeichnet, dass** die Zwischenförderstrecken derart der Förderstrecke (14) des Zuförderers (11) zugeordnet sind, dass mindestens eine Zwischenförderstrecke zur Übernahme des Transportbügels (10), insbesondere seines Bügelhakens (16), die Förderstrecke (14) des Zuförderers (11) schneidet.

10. Vorrichtung nach Anspruch 8 oder 9, **dadurch gekennzeichnet, dass** zur Übergabe des Transportbügels (10) vom Zwischenförderer (13) an den nachfolgenden Förderer (Abförderer 12) die Förderstrecke (15) des nachfolgenden Förderers (Abförderer 12) mindestens eine Zwischenförderstrecke verlängert, wobei vorzugsweise ein Endbereich der jeweiligen Zwischenförderstrecke einen Anfangsbereich der Förderstrecke (15) des nachfolgenden Förderers (Abförderer 12) etwas überlappt, vorzugsweise der Endbereich der mindestens einen Zwischenförderstrecke sich über den Anfangsbereich der Förderstrecke (15) des nachfolgenden Förderers (Abförderer 12) hinweg erstreckt.

11. Vorrichtung nach Anspruch 8, **dadurch gekennzeichnet, dass** alle Arme (26) an einem Ende mit einem Mittelpunkt (27) des Zwischenförderers (13) verbunden sind.

12. Vorrichtung nach Anspruch 8, **dadurch gekennzeichnet, dass** freie Enden (30) aller vorzugsweise stangenartig ausgebildeten Arme (26) zur Bildung der Zwischenförderstrecken des Zwischenförderers (13) auf einer gedachten Kreisbahn liegen, die konzentrisch um den Mittelpunkt (27) des Zwischenförders (13) verläuft.

13. Vorrichtung nach Anspruch 8, **dadurch gekennzeichnet, dass** der Zwischenförderer (13) nach Art eines Drehkreuzes oder Drehsterns ausgebildet ist, wobei das Drehkreuz bzw. der Drehstern eine im Mittelpunkt (27) des Zwischenförderers (30) liegende Drehachse (29) aufweist, um die alle Arme (26) drehend herumbewegbar sind, vorzugsweise die Arme (26) ausgehend vom Mittelpunkt (27) des drehstern- oder drehkreuzartigen Zwischenförderers (13) geneigt verlaufen, indem die Arme (26) zu ihren freien Enden (30) hin abfallen und/oder die Drehachse (29) des drehstern- oder drehkreuzartig ausgebildeten Zwischenförderers (13) aufrecht verläuft, vorzugsweise senkrecht oder leicht zur Senkrechten geneigt.

14. Vorrichtung nach Anspruch 8, **dadurch gekennzeichnet, dass** das Drehkreuz oder der Drehstern zur Bildung des Zwischenförderers (13) derart dem Zuförderer (11) zugeordnet ist, dass ein vertikaler Abschnitt, insbesondere Steg (18), des Bügelhakens (16) beim Weitertransport entlang der Förderstrecke (14) des Zuförderers (11) zwischen zwei benachbarte Arme (26) des Zwischenförderers (13) gelangt und dabei die nach Art eines Drehkreuzes oder Drehsterns orientierten Arme (26) des Zwischenförderers (13) um die Drehachse (29) verdreht, wenn ein Arm (26) die Förderstrecke (14) des Zuförderers (11) vorzugsweise etwa rechtwinklig schneidet und der mindestens eine Arm (26) sich unter dem Bügelhaken (16) befindet und vorzugsweise dem mindestens einen Arm (26), an den der Transportbügel (10) vom Zuförderer (11) übergeben wird, der nachfolgende Förderer (Abförderer 12) zugeordnet ist.

15. Vorrichtung nach Anspruch 8, **dadurch gekennzeichnet, dass** der nachfolgende Förderer (Abförderer 12) eine Schiene (31) zum Entlanggleiten des Transportbügels (10) aufweist und über einen Anfangsbereich der Schiene (31) ein Endbereich desjenigen Arms (26) oder derjenigen beiden Arme (26) sich befindet bzw. befinden, woran der Transportbügel (10) vom Zuförderer (11) übergeben worden ist.

## Claims

1. A method for transferring a transporting hanger (10) for garments from a feed conveyor (11) to a following conveyor, in particular a delivery conveyor (12), the transporting hanger (10) hanging by a hanger hook (16) on the feed conveyor (11) being released from the feed conveyor (11), upon release from the feed conveyor (11) being caught by an intermediate conveyor (13) and, for further transport, the transporting hanger (10) being hung onto the following conveyor, **characterized in that** when the transporting hanger (10) is released the hook (16) of said hanger (10) is caught by at least one short intermediate conveying section of the intermediate conveyor (13) and is transferred by said intermediate conveying section to the following conveyor, with the at least one intermediate conveying section being moved by the transporting hanger (10) into a position for catching a hanger hook (16) before said transporting hanger (10) is released from the feed conveyor (11).

2. The method as claimed in claim 1, **characterized in that** at least one intermediate conveying section is moved into the position for catching preferably the hanger hook (16) by pivoting about one end, in particular that the at least one intermediate conveying section is pivoted transversely in relation to the longitudinal axis of the at least one intermediate conveying section by turning about an axis of rotation (29).

3. The method as claimed in claim 1 or 2, **characterized in that** a free end (30) of the at least one intermediate conveying section remote from the axis of rotation (29) is moved during the pivoting of the same on a circular path about the axis of rotation (29) and this circular path intersects, preferably crosses, the conveying section (14) of the feed conveyor (11), with the transporting hanger (10) being released from the feed conveyor (11) onto at least one intermediate conveying section of the intermediate conveyor (13) after a transporting hanger (10), in particular a hanger hook (16) of same, enters the circular path of the free ends (30) of the intermediate conveying sections.

4. The method as claimed in claim 3, **characterized in that** each intermediate conveying section of the intermediate conveyor (13) slopes down toward the free end (30) for the hanger hook (16) of the transporting hanger (10) to slide along the at least one intermediate conveying section and over the free end (30) of the same.

5. The method as claimed in one of the preceding claims, **characterized in that** the at least one intermediate conveying section serving for transferring the transporting hanger (10) to the conveying section (15) of the following conveyor (delivery conveyor 12) is momentarily arranged in front during the transfer to the following conveyor (delivery conveyor 12) of the conveying section (15) of the same.

6. The method as claimed in one of the preceding claims, **characterized in that** the transporting hanger (10) is transferred to the following conveyor (delivery conveyor 12) approximately in the position at which the at least one intermediate conveying section receives the transporting hanger (10) from the feed conveyor (11).

7. The method as claimed in claim 4, **characterized in that** by sliding over the free end (30) of at least one intermediate conveying section, the hanger hook (16) of the transporting hanger (10) is transferred to the conveying section (15) of the following conveyor (delivery conveyor 12), in particular by the hanger hook (16) of the transporting hanger (10) that slides off from the at least one intermediate conveying section sliding onto the conveying section (15) of the following conveyor (delivery conveyor 12) that is correspondingly made to slope downward preferably in the conveying direction (32).

8. A device for transferring a transporting hanger (10) for garments from a feed conveyor (11) to a following conveyor, in particular a delivery conveyor (12), with an intermediate conveyor (13) being arranged between the feed conveyor (11) and the following conveyor, **characterized in that** the intermediate conveyor (13) has a plurality of intermediate conveying sections that can be moved in common, the intermediate conveying sections of the intermediate conveyor (13) are formed by elongate arms (26) oriented in a star-like or spider-like manner **in that**, proceeding from a centre point (27) of the intermediate conveyor (13) lying on a axis of rotation (29), all arms (26) of the intermediate conveying sections extend outwards in a radial manner, and the intermediate conveyor (13) with the arms (26) is freely rotatable about the axis of rotation (29).

9. The device as claimed in claim 8, **characterized in that** the intermediate conveying sections are assigned to the conveying section (14) of the feed conveyor (11) in such a way that at least one intermediate conveying section intersects the conveying section (14) of the feed conveyor (11) for the takeover of the transporting hanger (10), in particular the hanger hook (16) of same.

10. The device as claimed in claim 8 or 9, **characterized in that**, for the transfer of the transporting hanger (10) from the intermediate conveyor (13) to the following conveyor (delivery conveyor 12), the conveying section (15) of the following conveyor (delivery conveyor 12) acts as an extension of at least one intermediate conveying section, preferably with an end region of the respective intermediate conveying section overlapping somewhat a beginning region of the conveying section (15) of the following conveyor (delivery conveyor 12), preferably with the end region of the at least one intermediate conveying section extending above the beginning region of the conveying section (15) of the following conveyor (delivery conveyor 12).

11. The device as claimed in claim 8, **characterized in that** all arms (26) are connected at one end to a centre point (27) of the intermediate conveyor (13).

12. The device as claimed in claim 8, **characterized in that** free ends (30) of all the preferably rod-like configured arms (26), which form the intermediate conveying sections of the intermediate conveyor (13), lie on an imaginary circular path which extends concentrically around the centre point (27) of the intermediate conveyor (13).

13. The device as claimed in claim 8, **characterized in that** the intermediate conveyor (13) is formed in the manner of a turnstile or turret, the turnstile or turret having an axis of rotation (29) lying at the centre point (27) of the intermediate conveyor (30), about which all the arms (26) can be moved in a rotating manner, preferably with the arms (26) extending in an inclined manner from the centre point (27) of the turret-like or turnstile-like intermediate conveyor (13), **in that** the arms (26) slope down toward their free ends (30) and/or the axis of rotation (29) of the intermediate conveyor (13) formed in a turret-like or turnstile-like manner extends in an upright manner, preferably vertically or slightly inclined from the vertical.

14. The device as claimed in claim 8, **characterized in that**, to form the intermediate conveyor (13), the turnstile or turret is assigned to the feed conveyor (11) in such a way that, during the further transport along the conveying section (14) of the feed conveyor (11), a vertical portion, in particular a stem (18), of the hanger hook (16) ends up between two adjacent arms (26) of the intermediate conveyor (13) and the arms (26) of the intermediate conveyor (13), oriented in the manner of a turnstile or turret, thereby turn about the axis of rotation (29) when one arm (26) intersects the conveying section (14) of the feed conveyor (11), preferably at approximately a right angle, and the at least one arm (26) is located under the hanger hook (16) and preferably the at least one arm (26) to which the transporting hanger (10) is transferred from the feed conveyor (11) is assigned the following conveyor (delivery conveyor 12).

15. The device as claimed in claim 8, **characterized in that** the following conveyor (delivery conveyor 12) has a rail (31) for the transporting hanger (10) to slide along, and located over a beginning region of the rail (31) there is an end region of the arm (26), or of the two arms (26), to which the transporting hanger (10) has been transferred from the feed conveyor (11).

## Revendications

1. Procédé pour transférer une boucle de transport (10) pour des vêtements depuis un dispositif d'alimentation (11) vers un dispositif de transport suivant, notamment un dispositif d'évacuation (12), la boucle de transport (10) accrochée par un crochet de boucle (16) au dispositif d'alimentation (11) étant éjectée du dispositif d'alimentation (11), lors de l'éjection depuis le dispositif d'alimentation (11), étant réceptionné par un dispositif de transport intermédiaire (13) et étant accrochée au dispositif de transport suivant en vue du transport ultérieur de la boucle de transport (10), **caractérisé en ce que** le crochet de boucle (16) de la boucle de transport (10), lors de l'éjection depuis le dispositif d'alimentation (11), est réceptionné par au moins une courte section de transport intermédiaire du dispositif de transport intermédiaire (13) et est transféré de la section de transport intermédiaire vers le dispositif de transport suivant, l'au moins une section de transport intermédiaire étant déplacée de la boucle de transport (10) avant son éjection depuis le dispositif d'alimentation (11) dans une position permettant de réceptionner un crochet de boucle (16).

2. Procédé selon la revendication 1, **caractérisé en ce qu'**au moins une section de transport intermédiaire est déplacée par pivotement autour d'une extrémité dans la position permettant de réceptionner de préférence le crochet de boucle (16), et en particulier le pivotement de l'au moins une section de transport intermédiaire s'effectuant autour d'un axe de rotation (29) transversalement à l'axe longitudinal de l'au moins une section de transport intermédiaire.

3. Procédé selon la revendication 1 ou 2, **caractérisé en ce qu'**une extrémité libre (30), opposée à l'axe de rotation (29), de l'au moins une section de transport intermédiaire est déplacée pendant le pivotement de cette dernière sur une piste circulaire autour de l'axe de rotation (29), et cette piste circulaire coupe la section de transport (14) du dispositif d'alimentation (11), de préférence la croise, et après l'entrée d'une boucle de transport (10), notamment d'un crochet de boucle (16) de celle-ci, dans la piste circulaire des extrémités libres (30) des sections de transport intermédiaires, la boucle de transport (10) est éjectée du dispositif d'alimentation (11) sur au moins une section de transport intermédiaire du dispositif de transport intermédiaire (13).

4. Procédé selon la revendication 3, **caractérisé en ce que** chaque section de transport intermédiaire du dispositif de transport intermédiaire (13) diminue vers l'extrémité libre (30) pour faire glisser le crochet de boucle (16) de la boucle de transport (10) le long de l'au moins une section de transport intermédiaire par-dessus l'extrémité libre (30) de celle-ci.

5. Procédé selon l'une quelconque des revendications précédentes, **caractérisé en ce que** l'au moins une section de transport intermédiaire servant au transfert de la boucle de transport (10) vers la section de transport (15) du dispositif de transport suivant (dispositif d'évacuation 12), est temporairement placée en avant pendant le transfert vers dispositif de transport suivant (dispositif d'évacuation 12) de la section de transport (15) de celui-ci.

6. Procédé selon l'une quelconque des revendications précédentes, **caractérisé en ce qu'**approximativement dans la position dans laquelle l'au moins une section de transport intermédiaire reprend la boucle de transport (10) depuis le dispositif d'alimentation (11), la boucle de transport (10) est transférée vers le dispositif de transport suivant (dispositif d'évacuation 12).

7. Procédé selon la revendication 4, **caractérisé en ce que** le crochet de boucle (16) de la boucle de transport (10) est transféré par glissement par-dessus l'extrémité libre (30) d'au moins une section de transport intermédiaire vers la section de transport (15) du dispositif de transport suivant (dispositif d'évacuation 12), notamment par glissement du crochet de boucle (16) de la boucle de transport (10) glissant depuis l'au moins une section de transport intermédiaire, sur la section de transport (15) du dispositif de transport suivant (dispositif d'évacuation 12) s'étendant avec une inclinaison vers le bas correspondante de préférence dans la direction de transport (32) .

8. Dispositif de transfert d'une boucle de transport (10) pour des vêtements depuis un dispositif d'alimentation (11) vers un dispositif de transport suivant, notamment un dispositif d'évacuation (12), comprenant un dispositif de transport intermédiaire (13) disposé entre le dispositif d'alimentation (11) et le dispositif de transport suivant, **caractérisé en ce que** le dispositif de transport intermédiaire (13) présente plusieurs sections de transport intermédiaires déplaçables conjointement, les sections de transport intermédiaires du dispositif de transport intermédiaire (13) étant formées par des bras (26) allongés orientés en forme d'étoile ou de toile d'araignée, tous les bras (26) des sections de transport intermédiaires s'étendant radialement vers l'extérieur depuis un centre (27) du dispositif de transport intermédiaire (13) situé sur un axe de rotation (29), et le dispositif de transport intermédiaire (13) pouvant être tourné librement avec les bras (26) autour de l'axe de rotation (29).

9. Dispositif selon la revendication 8, **caractérisé en ce que** les sections de transport intermédiaires sont associées à la section de transport (14) du dispositif d'alimentation (11) de telle sorte qu'au moins une section de transport intermédiaire coupe la section de transport (14) du dispositif d'alimentation (11), pour transférer la boucle de transport (10), en particulier son crochet de boucle (16).

10. Dispositif selon la revendication 8 ou 9, **caractérisé en ce que** pour le transfert de la boucle de transport (10) du dispositif de transport intermédiaire (13) vers le dispositif de transport suivant (dispositif d'évacuation 12), la section de transport (15) du dispositif de transport suivant (dispositif d'évacuation 12) prolonge au moins une section de transport intermédiaire, et de préférence une région d'extrémité de la section de transport intermédiaire respective chevauchant quelque peu une région de début de la section de transport (15) du dispositif de transport suivant (dispositif d'évacuation 12), de préférence la région d'extrémité de l'au moins une section de transport intermédiaire s'étendant au-delà de la région de début de la section de transport (15) du dispositif de transport suivant (dispositif d'évacuation 12).

11. Dispositif selon la revendication 8, **caractérisé en ce que** tous les bras (26) sont connectés par une extrémité à un centre (27) du dispositif de transport intermédiaire (13).

12. Dispositif selon la revendication 8, **caractérisé en ce que** des extrémités libres (30) de tous les bras (26) réalisés de préférence en forme de tiges, se situent sur une piste circulaire imaginaire pour former les sections de transport intermédiaires du dispositif de transport intermédiaire (13), laquelle piste circulaire s'étend concentriquement autour du centre (27) du dispositif de transport intermédiaire (13).

13. Dispositif selon la revendication 8, **caractérisé en ce que** le dispositif de transport intermédiaire (13) est réalisé à la manière d'un tourniquet ou similaire, le tourniquet ou similaire présentant un axe de rotation (29) situé au centre (27) du dispositif de transport intermédiaire (30), autour duquel tous les bras (26) peuvent être déplacés par rotation, de préférence les bras (26) s'étendant de manière inclinée à partir du centre (27) du dispositif de transport intermédiaire (13) en forme de tourniquet ou similaire, les bras (26) descendant vers leurs extrémités libres (30) et/ou l'axe de rotation (29) du dispositif de transport intermédiaire (13) en forme de tourniquet ou similaire s'étendant de manière dressée, de préférence verticalement ou de manière légèrement inclinée par rapport à la verticale.

14. Dispositif selon la revendication 8, **caractérisé en ce que** le tourniquet ou similaire servant à former le dispositif de transport intermédiaire (13) est associé au dispositif d'alimentation (11) de telle sorte qu'une portion verticale, en particulier une nervure (18), du crochet de boucle (16), lors du transport ultérieure le long de la section de transport (14) du dispositif d'alimentation (11), parvienne entre deux bras adjacents (26) du dispositif de transport intermédiaire (13) et tourne ainsi les bras (26) du dispositif de transport intermédiaire (13) orientés à la manière d'un tourniquet ou similaire autour de l'axe de rotation (29), quand un bras (26) coupe la section de transport (14) du dispositif d'alimentation (11) de préférence approximativement à angle droit et que l'au moins un bras (26) se trouve sous le crochet de boucle (16) et est transféré de préférence vers l'au moins un bras (26), auquel la boucle de transport (10) est transférée depuis le dispositif d'alimentation (11), qui est associé au dispositif de transport suivant (dispositif d'évacuation 12).

15. Dispositif selon la revendication 8, **caractérisé en ce que** le dispositif de transport suivant (dispositif d'évacuation 12) présente un rail (31) pour le glissement de la boucle de transport (10), et une région d'extrémité du bras (26) ou des deux bras respectifs (26), sur lesquels la boucle de transport (10) a été transférée depuis le dispositif d'alimentation (11), se trouve sur une région de début du rail (31) .
